# EUROPEAN PATENT APPLICATION

(11) **EP 1 843 114 A1**
(43) Date of publication of application: **10.10.2007**
(21) Application number: 06112331.1
(22) Date of filing: 06.04.2006
(51) Int. Cl.: F26B 17/10, F26B 23/02, F26B 23/00

(54) **Dryer plant**

(71) Applicant: Swedish Exergy Consulting AB, 417 55 Göteborg (SE)
(72) Inventor: Münter, Claes, SE-421 66, Västra Fölunda (SE); Verma, Prem, SE-418 31, Göteborg (SE)
(74) Representative: Kraenzmer, Martin

(57) **Abstract**

The present invention relates to a process for reducing water content in wood material, which process comprises the steps of:
- feeding said wood material into an overheated vapour filled, oxygen free drying apparatus (1),
- indirectly overheating said vapour in said drying apparatus (1) by heating means (3), whereby water and other chemical substances vaporise from said wood material into the atmosphere within the drying apparatus (1),
- releasing surplus drying apparatus vapour into separation means (2) which are connected to said drying apparatus (1), and
- discharging the dried wood material from said drying apparatus (1) when the moisture content in the wood material has reached a level of less than 10 % by weight.
The present invention also relates to wood material drying means to be used in said process.

## Description

### Field of the invention

The present invention relates to a process for reducing water content in wood material. The present invention also relates to wood material drying means to be used in the process.

### Technical Background

In connection with the desire to limit the use of poisonous impregnation chemicals for the impregnation of wood for i.a. outdoor use, new products containing 30-70% of thermoplastic has been developed, so called bio-composites. These bio-composites put a very much less environmental stress on its surrounding are thus regarded as a more feasible material in terms of their life cycle.

By mixing almost completely dry wood particles, having a moisture content of less than 0.5 %, with a thermo-plastic into granules, a board can be extruded in a machine, or moulded just like PVC or any other plastic. This way different profiles, even with hollow sections, may be produced and used for i.a. window and door frames. The bio-composites do not absorb water and therefore swelling and shrinking does not take place as it does with normal wood. The boards may be used also for building dams or in direct contact with the ground where the board is also in direct contact with water. Other shapes and designs of the bio-composite may be achieved, or other manners of production may be utilised.

One of the problems producing bio-composite products is to find an economical process for drying the wood particles to less than 0.5 % moisture content. Normal wood, when recently taken out of the forest, may have a moisture content of between 60 and 30 % based on weight, and this amount of water is very energy consuming to re-this amount of water is very energy consuming to remove. Conventional dryers use hot air or flue gas for their heating and are very energy consuming. Another problem when drying wood, and especially when drying it to such low moisture contents as is the case here, is that there is a not negligible risk for fire or for dust explosions. At least for the wood material normally get charred. The very high temperatures that are required to achieve the high dryness of more than 99.5% of the wood raw material induces these risks. Not only is it a risk for loosing a batch of raw material, but it is also a risk for the apparatus and operators.

When drying the wood raw material, not only evaporation of water but also volatile hydrocarbons, terpenes, will be released and found in the exhaust gases from the dryer installation. These volatiles are found naturally in the wood raw material and are vaporised due to the high temperatures in the drying process. Not only do they represent a risk of explosions as discussed above, but these volatiles reacts photo-chemically with nitrogen oxides which exist naturally in the air. Thereby they form ground level ozone O₃ which is unhealthy to humans, animals and plants. This way the environmentally friendliness of the bio-composites is reduced.

It is thus an object of the present invention to design a wood drying apparatus which at least partly overcomes the above-mentioned problems and which increases the environmentally friendliness of the bio-composites thus produced.

### Summary of the invention

The problem discussed above has been at least partly solved by the present invention. According to a first aspect of the present invention a process for reducing water content in wood material is disclosed, which process comprises the steps of:
- feeding said wood material into an overheated vapour filled, oxygen free drying apparatus,
- indirectly overheating said vapour in said drying apparatus by heating means, whereby water and other chemical substances vaporise from said wood material into the atmosphere within the drying apparatus,
- releasing surplus drying apparatus vapour into separation means which are connected to said drying apparatus, and
- discharging the dried wood material from said drying apparatus when the moisture content in the wood material has reached a level of less than 10 % by weight.

In this way an environmentally friendly process of drying wood material, especially wood materials for bio-composites, is disclosed. The combination of drying in an atmosphere of overheated vapour, but yet oxygen free, leads to the possibility to remove so much water from the wet wood material that the moisture content may be lowered below 10 %. This is necessary when using the wood material in the production of bio-composites.

It is advantageous to let the step of discharging the dried wood material not to be performed until the wood material has reached a moisture content of preferably less than 5 %, more preferably less than 1 %, most preferably less than 0.5 %. The more dry the wood is needed to be, the better the inventive process is for the environment, and the less risk for fire and explosions proportionately.

It is advantageous for the process to comprise the step of:
- recovering heat energy from said separation means. It is a general strive in society of today to limit the energy consumption. Even though the drying process is still energy consuming, the manner of performing the process is reducing the net energy consumption.

It is advantageous for the process to comprise the step of:
- separating and recovering the combustible substances from said surplus atmosphere. This way less hazardous substances are released into nature.

It is advantageous that said separation means are condensing means.

It is advantageous that the process comprises the steps of:
- incinerating said recovered combustible substances, and
- recovering any thereby produced heat energy. This even further reduces the net energy consumption of the process.

It is advantageous that the process comprises the step of:
- recovering energy from said process by a turbine connected to said drying apparatus.

It is advantageous that said turbine is a steam turbine.

It is advantageous that said turbine is a NH₃-driven turbine.

It is advantageous that the process comprises the step of:
- discharging said dried wood material from said drying apparatus after drying said wood material to a moisture content of less than 10 %,
- sieving said dried wood material into fractions,
- removing unwanted wood material fractions, and
- re-feeding the wanted wood material fractions into said drying apparatus, or into another similar drying apparatus, and further drying the wanted wood material fractions to a lower moisture content.

Such a two-step drying process reduces the amount of material to be dried in the second step, thus reducing energy consumption.

It is advantageous that the process comprises the step of:
- incinerating said unwanted wood material fractions, and
- recovering any thereby produced heat energy. Again the net energy consumption is reduced.

It is advantageous that the process comprises the step of:
- mixing said dried wood material with a granule formed thermoplastic material,
- shaping said mixture to final products, and
- heating said mixture to securing said final products shape.

It is advantageous that the process comprises the step of:
- restoring any heat energy produced by said process into the drying apparatus via said heating means.

It is advantageous that the below described wood material drying means are used in the present process.

According to a second aspect of the present invention wood material drying means are disclosed, comprising:
- wood material feeding means,
- a drying whirling enclosure connected to indirect heating means, said heating means being adapted in use to overheat any oxygen free, aqueous vaprour present in the drying means,
- a valve for release of surplus vapours from within said drying means,
- dried wood material discharge means, said discharge means being adapted in use to release the surplus vapours when said wood material has a moisture content of less than 10 % based on weight.

It is advantageous that the drying means comprise:
- separation means connected via said valve to said drying means for separation of combustible substances from said vapours.

It is advantageous that said separation means are condensation means.

It is advantageous that said combustible substances are hydrocarbons (HC), such as terpenes, tars and lignin.

It is advantageous that the drying means comprise incineration means, wherein said combustible substances are recovered and incinerated in said incineration means.

It is advantageous that any heat energy from said incineration means is restored into said drying apparatus via said heating means.

It is advantageous that the drying means comprise second wood material drying means, whereby said wood material in a first step is dried to a moisture content of less than 10 % in said first drying means, and said wood material in a second step is dried to a moisture content of less than 1 % in said second drying means.

It is advantageous that said drying means are adapted in use to operate at a pressure between 0.5 and 4 bar.

It is advantageous that said drying means are adapted in use to operate at a vapour temperature between 110 and 400°C.

It is advantageous that said drying means are a rotary dryer, pneumatic dryer or a fluid bed dryer.

It is advantageous that said heating means are adapted in use to operate using condensing steam at 8 - 25 bar, cooling of flue gases or using thermal oil.

### Description of the drawings

The present invention will be described in more detail using exemplary embodiments thereof which are disclosed in the accompanying drawings, in which:
Fig. 1 is a schematic view of a wood material drying apparatus according to the present invention,
Fig. 2 is a schematic view of a wood material drying apparatus having a condensing turbine according to the present invention,
Fig. 3 is a schematic view of a wood material drying apparatus having an organic Rankine-cycle using i.e. an ammonia circuit according to the present invention,
Fig. 4 is, a schematic view of a wood material drying apparatus having volatile recovery means according to the present invention, and
Fig. 5 is a schematic view of two wood material drying apparatuses according to the present invention.

### Detailed description of preferred embodiments

Before mixing and granulation with thermo-plastic material and producing the bio-composites, wood fibres have to be almost absolutely dry with a maximum of 0.5 % water content calculated by weight. It is very difficult to achieve this and the risk for fire and explosion is obvious.

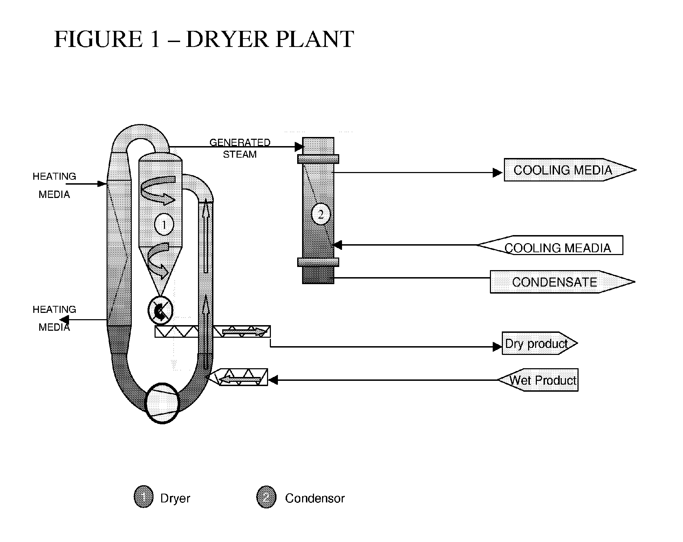

The principle of the drying apparatus according to the present invention is shown in Fig. 1. A drying cyclone 1 according to the figure is one possible embodiment of the claimed drying whirling enclosure. The cyclone 1 is connected to a circuit comprising a heat exchanger and a fan. Furthermore, a helical conveyor is feeding the drying apparatus with wet wood material to be dried, and another helical conveyor in combination with a rotary vane feeder are discharging the dried wood material. A pressure control valve is connected to the circuit. The system is closed such that no other substances than wood material and heat energy is passing into, or out of, the system.

Any type of indirectly heated drying apparatus can be used, rotary drum dryers, pneumatic dryers, fluid bed dryers etc. It is however important that the indirectly heated drying apparatus can operate without admittance of any oxygen and that it may be pressurised above normal atmospheric pressure levels. Compared to how these dryers normally operate with air or flue gas, the drying apparatus according to the present invention is closed in the way being described below. No air or flue gas is introduced since the drying apparatus operates at a pressure above atmospheric pressure. When introducing the wet wood particles, normally with 50 - 60 % water content based on weight, water vapour is formed by evaporation. With proper feeding and discharge equipment, such as rotary valves or plug screws etc. as described above, the system will not contain any air and therefore no oxygen. The apparatus can be pressurized up to 3-5 bar (g) in order to recover heat. Since no oxygen is present, the risk for fire or dust explosions is reduced or even removed.

The principle of wood drying in overheated aqueous vapour, is that initially overheated steam - and later vapour from the wood material - is trying to become saturated with water. It thus collects water from any objects present. In this case water is collected from the wet wood material, i.e. the wet wood material that is fed into the drying apparatus. When water passes from the wood material, the temperature of the steam/vapour is simultaneously lowered. Consequently the moisture content of the wood material is reduced. Again the steam, which now thus contains vapour from the wood, needs to be overheated by the heat exchanger in order to collect more water from the wood material. The fan circulates the steam/vapour to keep the process running.

When starting up the dryer, water is sprayed into the system and with heat from the heat exchanger it will evaporate into steam. When reaching the right process parameters, pressure and temperatures, the wet material is introduced. The steam will soon be replaced by the vapours from drying the wet wood as described above. These vapours will mainly consist of water vapour but also volatiles and extractable chemical compounds present in the wood. Table 1 gives some examples of the composition of the dryer vapour from drying different species of softwood. As may be seen the vapours comprises mainly of water, but also of other substances. The volatiles are ether or benzene extractables.

**Table 1: Composition of vapors from drying fresh wood from 50% moisture content down to 0,5% moisture content**

| Species of wood | Vapour content % by weight | |
|---|---|---|
| | Water vapour | Volatiles |
| Picea abies, Scandinavian spruce | 97 | 3 |
| Ponderosa pine | 80 | 20 |
| Pinus taeda, loblolly pine | 97,5 | 2,5 |
| Douglas fir | 94 | 6 |

The vapours are circulated by the fan and re-heated indirectly by the heat exchanger. As drying continues the pressure in the dryer will increase due to the release of water and volatiles from the wet wood material, and the excess of vapours will be purged through the pressure control valve into the condensor 2.

The generated vapours can be used for heating either the drying process self or for heating another process or be sold on the energy market. By closing the drying process, the vapours will be contained and can be used for both recovering heat, but also for collecting volatile hydrocarbons contained therein and released from the wood material in the drying process. These volatile hydrocarbons consist mainly of terpenes which are toxic and produce ozone when emitted to the atmosphere. They also contain tars and lignin from the wood. Using the process according to the present invention the terpenes (turpentine) can be used as a fuel in the process self, be used in another process or be sold on the energy market. Either way, energy is recovered and may be restored into the process self making the process less energy consuming in terms of net energy use.

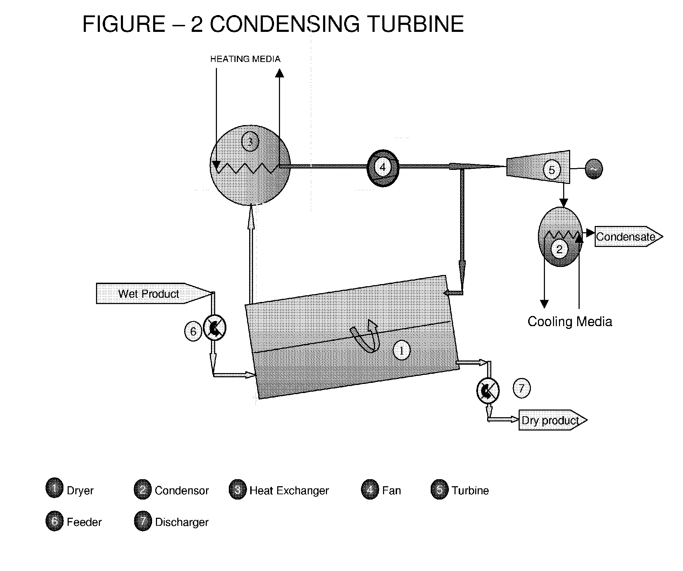

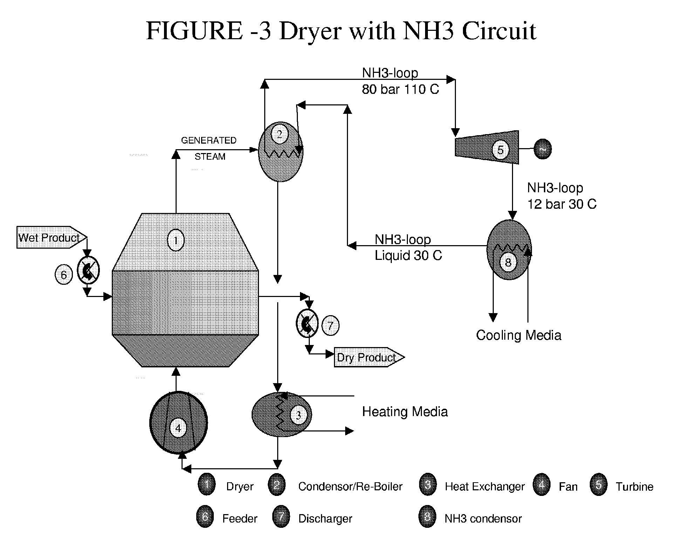

The vapours are preferable extracted by condensation in said condensor 2. The vapours can also be used for power production from a condensing steam turbine or any other Rankine-cycle. Fig. 1 discloses the heat recovery by condensation. Fig. 2 discloses a condensing turbine and Fig. 3 discloses the use of Rankine-cycle with ammonia, NH₃. Electrical power can consequently also be produced in connection with the drying process, both before and after the drying process using i.a. steam or gas turbines.

Table 2 shows the difference in gross and net heat consumption between conventional open type dryers compared to the present invention. It is noticed that the net energy consumption is reduced considerably in the process according to the embodiment of the present invention in which energy from the vapours is recovered.

**Table 2: Energy consumption of various dryers. Heat and electrical energy consumption in kWh/ton evaporated water.**

| Type of dryer | gross energy | net energy | electrical consumption |
|---|---|---|---|
| Open type dryers | | | |
| Rotary dryer | 950 | 950 | 25 |
| Pneumatic, flash dryer | 1000 | 1000 | 30 |
| Fluid bed | 900 | 900 | 25 |

| Cloosed-loop dryer | | | |
|---|---|---|---|
| Present invention with energy recovery | 750 | 150 | 30 |

Table 3 shows typical process parameters for drying wet wood material according to another embodiment of the present invention, in which two steps of drying the wet wood material is utilised. In the first step the moisture content is reduced from approximately 50 % to approximately 10 - 15 %. In the second step the moisture content is reduced from approximately 10 - 15 % down to the wanted 0.5 % using its own vapours. In between the first and the second drying step, the partly wet wood material is removed from the drying apparatus 1 and may be sieved. For instance too small and too large wood particles may be removed. They may not be wanted in the final product.

Especially for the production of bio-composites removal of unwanted wood particle-sizes is useful. Oversized (> about 3 mm) particles and dust (< about 0.5 mm) are thus removed. These dried by-products can be used and recovered as bio-fuels. Oversized particles can be used also for energy-pellet production, and the dust fraction may be used and restored as fuel for heating the dryers 1. Flue gas is generated from burning the dust in incineration means such as a dust burner, instead of, or in combination with, the use of natural gas.

**Table 3: Process conditions for drying in two steps using the vapours from the wet/moist product.**

| Step 1 | | | | | |
|---|---|---|---|---|---|
| Drying wood particles from 50% to 10% moisture content | | | | | |
| *Inlet* | % dry solids | pressure, kPa (abs) | temperature, deg C | flow, kg/hr | heat flux, kW |
| Wet wood particles | 50 | 100 | 10 | 10842 | 86 |
| Heating by natural gas | | 105 | 325 | 50000 | 3844 |
| Electrical input | | | | | 200 |
| Total | | | | | 4130 |

| *Outlet* | | | | | |
|---|---|---|---|---|---|
| Dried product | 90 | 100 | 130 | 6023 | 385 |
| Surplus vapours | | 200 | 117 | 4719 | 3570 |
| Losses, thermal and leakages | | | | 100 | 175 |
| Total | | | | | 4130 |
| From condensation of surplus vapours about 3000 kW is recovered | | | | | |

| Step 2 Final drying after sieving to remove fines and before compounding with thermoplastic *Inlet* | | | | | |
|---|---|---|---|---|---|
| Wood particles, predried | 85 | 100 | 30 | 5294 | 84 |
| Heating by natural gas | | 105 | 325 | 10000 | 737 |
| Electrical input | | | | | 30 |
| Total | | | | | 851 |

| *Outlet* | | | | | |
|---|---|---|---|---|---|
| Finished product | 99,5 | 100 | 130 | 4523 | 247 |
| Surplus vapours | | 200 | 117 | 722 | 546 |
| Losses, thermal and leakages | | | | 50 | 58 |
| Total | | | | | 851 |

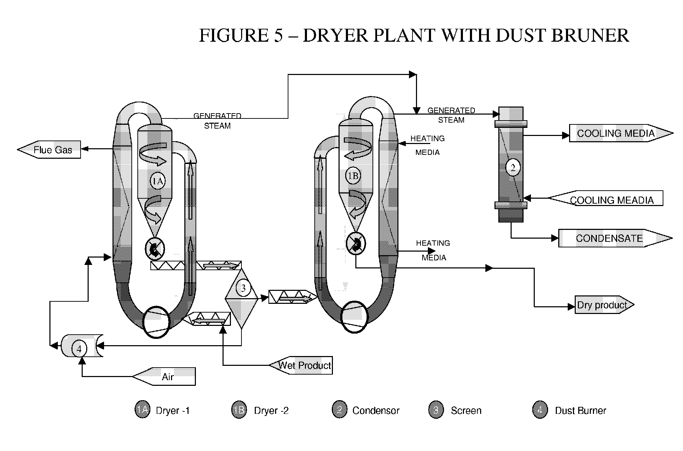

Fig. 5 is showing how the dust fraction, approximately 17 % of the total wood flow, can be used and restored for heating the drying apparatus 1.

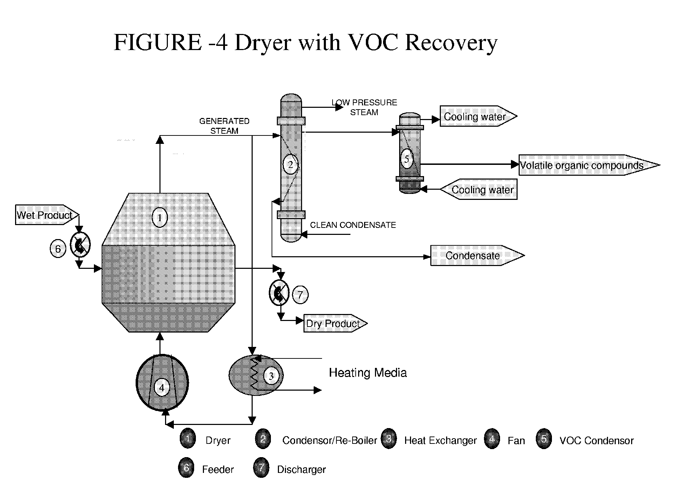

In connection with condensation in the condenser 2 of the vapours, volatiles, both condensed and incondensable, can be separated from the condensed water. Condensed volatiles are insoluble in cold water and can easily be separated. In-condensable gaseous hydrocarbons are being evacuated from the condenser 2, see Fig. 4.

Both condensed and in-condensed volatile hydrocarbons can be used as fuel and will not be emitted as hazardous gases to the atmosphere. This fuel may again be used in incineration means and the heat thereby produced may be used as heat energy in the drying apparatus.

It is obvious from the description of the present invention that not only are the risks of hazardous accidents very much reduced, but also the energy consumption for performing the drying process is considerably reduced. Furthermore, environmentally unfriendly substances are collected and not released to nature. This is emphasised when also taking into account the environmentally friendliness of the bio-composites produced by the wood dried according to the inventive process in comparison to the poisonous substances such as arsenic, copper and chrome that used to be the standard impregnation method for outdoor wood only a decade ago. Therefore a life-cycle analysis of the process and of the bio-composite thereby produced is improved in terms of their environmental load.

## Claims

1. A process for reducing water content in wood material, which process comprises the steps of:
- feeding said wood material into an overheated vapour filled, oxygen free drying apparatus,
- indirectly overheating said vapour in said drying apparatus by heating means, whereby water and other chemical substances vaporise from said wood material into the atmosphere within the drying apparatus,
- releasing surplus drying apparatus vapour into separation means which are connected to said drying apparatus, and
- discharging the dried wood material from said drying apparatus when the moisture content in the wood material has reached a level of less than 10 % by weight.

2. A process according to claim 1, wherein the step of discharging the dried wood material is not performed until the wood material has reached a moisture content of preferably less than 5 %, more preferably less than 1 %, most preferably less than 0.5 %.

3. A process according to any one of the above claims, further comprising the step of:
- recovering heat energy from said separation means.

4. A process according to any one of the above claims, further comprising the step of:
- separating and recovering the combustible substances from said surplus atmosphere.

5. A process according to any one of the above claims, wherein said separation means are condensing means.

6. A process according to any one of claims 4 - 5, further comprising the steps of:
- incinerating said recovered combustible substances, and
- recovering any thereby produced heat energy.

7. A process according to any one of the above claims, further comprising the step of:
- recovering energy from said process by a turbine connected to said drying apparatus.

8. A process according to claim 7, wherein said turbine is a steam turbine.

9. A process according to claim 7, wherein said turbine is a NH₃-driven turbine.

10. A process according to any one of the above claims, further comprising the step of:
- discharging said dried wood material from said drying apparatus after drying said wood material to a moisture content of less than 10 %,
- sieving said dried wood material into fractions,
- removing unwanted wood material fractions, and
- re-feeding the wanted wood material fractions into said drying apparatus, or into another similar drying apparatus, and further drying the wanted wood material fractions to a lower moisture content.

11. A process according to claim 10, further comprising the step of:
- incinerating said unwanted wood material fractions, and
- recovering any thereby produced heat energy.

12. A process according to any one of the above claims, further comprising the step of:
- mixing said dried wood material with a granule formed thermoplastic material,
- shaping said mixture to final products, and
- heating said mixture to securing said final products shape.

13. A process according to any one of the above claims, further comprising the step of:
- restoring any heat energy produced by said process into the drying apparatus via said heating means.

14. A process according to any one of the above claims, in which wood material drying means according to claims 15 - 25 are used.

15. Wood material drying means, comprising:
- wood material feeding means,
- a drying whirling enclosure connected to indirect heating means, said heating means being adapted in use to overheat any oxygen free, aqueous vapour present in the drying means,
- a valve for release of surplus vapours from within said drying means,
- dried wood material discharge means, said discharge means being adapted in use to release the surplus vapours when said wood material has a moisture content of less than 10 % based on weight.

16. Wood material drying means according to claim 15, further comprising:
- separation means connected via said valve to said drying means for separation of combustible substances from said vapours.

17. Wood material drying means according to claim 18, wherein said separation means are condensation means.

18. Wood material drying means according to any one of claims 16 - 17, wherein said combustible substances are hydrocarbons (HC), such as terpenes, tars and lignin.

19. Wood material drying means according to any one of claims 16 - 17, further comprising incineration means, wherein said combustible substances are recovered and incinerated in said incineration means.

20. Wood material drying means according to claim 19, wherein any heat energy from said incineration means is restored into said drying apparatus via said heating means.

21. Wood material drying means according to any one of claims 14 - 20, further comprising second wood material drying means, whereby said wood material in a first step is dried to a moisture content of less than 10 % in said first drying means, and said wood material in a second step is dried to a moisture content of less than 1 % in said second drying means.

22. Wood material drying means according to any one of the claims 15 - 21, wherein said drying means are adapted in use to operate at a pressure between 0.5 and 4 bar.

23. Wood material drying means according to any one of the claims 15 - 22, wherein said drying means are adapted in use to operate at a vapour temperature between 110 and 400°C.

24. Wood material drying means according to any one of the claims 15 - 23, wherein said drying means are a rotary dryer, pneumatic dryer or a fluid bed dryer.

25. Wood material drying means according to any one of the claims 15 - 24, wherein said heating means are adapted in use to operate using condensing steam at 8 - 25 bar, cooling of flue gases or using thermal oil.

## Amended claims

### Amended claims in accordance with Rule 86(2) EPC.

**1.** A process for reducing water content in wood particles, which process comprises the steps of:
- feeding said wood particles into an overheated vapour filled, oxygen free drying apparatus (3) working above atmospheric pressure,
- indirectly overheating said vapour in said drying apparatus by heating means (3), whereby water and other chemical substances vaporise from said wood particles into the atmosphere within the drying apparatus (1),
- releasing surplus drying apparatus vapour into separation means (2) which are connected to said drying apparatus, and
- discharging the dried wood particles from said drying apparatus (1) when the moisture content in the wood particles has reached a level of less than 10 % by weight.

**2.** A process according to claim 1, wherein the step of discharging the dried wood particles is not performed until the wood particles has reached a moisture content of preferably less than 5 %, more preferably less than 1 %, most preferably less than 0.5 %.

**3.** A process according to any one of the above claims, further comprising the step of:
- recovering heat energy from said separation means (2).

**4.** A process according to any one of the above claims, further comprising the step of:
- separating and recovering the combustible substances from said surplus atmosphere.

**5.** A process according to any one of the above claims, wherein said separation means (2) are condensing means (2).

**6.** A process according to any one of claims 4 - 5, further comprising the steps of:
- incinerating said recovered combustible substances, and
- recovering any thereby produced heat energy.

**7.** A process according to any one of the above claims, further comprising the step of:
- recovering energy from said process by a turbine (5) connected to said drying apparatus (1).

**8.** A process according to claim 7, wherein said turbine (5) is a steam turbine.

**9.** A process according to claim 7, wherein said turbine (5) is a NH₃-driven turbine.

**10.** A process according to any one of the above claims, further comprising the step of:
- discharging said dried wood particles from said drying apparatus (1) after drying said wood particles to a moisture content of less than 10 %,
- sieving said dried wood particles into fractions,
- removing unwanted wood particles fractions, and
- re-feeding the wanted wood particles fractions into said drying apparatus (1), or into another similar drying apparatus (1), and further drying the wanted wood particles fractions to a lower moisture content.

**11.** A process according to claim 10, further comprising the step of:
- incinerating said unwanted wood particles fractions, and
- recovering any thereby produced heat energy.

**12.** A process according to any one of the above claims, further comprising the step of:
- mixing said dried wood particles with a granule formed thermoplastic material,
- shaping said mixture to final products, and
- heating said mixture to securing said final products shape.

**13.** A process according to any one of the above claims, in which wood particles drying means according to claims 14 - 24 are used.

**14.** Wood particles drying means (1), comprising:
- wood particles feeding means (6),
- a drying whirling enclosure (1) connected to indirect heating means (3), said heating means (3) being adapted in use to overheat any oxygen free, aqueous vapour present in the drying means (1), said drying means (1) being adapted in use to work above atmospheric pressure,
- a valve for release of surplus vapours from within said drying means (1),
- dried wood particles discharge means (7), said discharge means (7) being adapted in use to release the surplus vapours when said wood particles has a moisture content of less than 10 % based on weight.

**15.** Wood particles drying means (1) according to claim 14, further comprising:
- separation means (2) connected via said valve to said drying means (1) for separation of combustible substances from said vapours.

**16.** Wood particles drying means (1) according to claim 15, wherein said separation means (2) are condensation means (2).

**17.** Wood particles drying means (1) according to any one of claims 15 - 16, wherein said combustible substances are hydrocarbons (HC), such as terpenes, tars and lignin.

**18.** Wood particles drying means (1) according to any one of claims 15 - 16, further comprising incineration means, wherein said combustible substances are recovered and incinerated in said incineration means.

**19.** Wood particles drying means (1) according to claim 18, wherein any heat energy from said incineration means is restored into said drying apparatus (1) via said heating means (3).

**20.** Wood particles drying means (1) according to any one of claims 14 - 19, further comprising second wood particles drying means (1), whereby said wood particles in a first step is dried to a moisture content of less than 10 % in said first drying means (1), and said wood particles in a second step is dried to a moisture content of less than 1 % in said second drying means (1).

**21.** Wood particles drying means (1) according to any one of the claims 14 - 20, wherein said drying means (1) are adapted in use to operate at a pressure between 0.5 and 4 bar above atmospheric pressure.

**22.** Wood particles drying means (1) according to any one of the claims 14 - 21, wherein said drying means (1) are adapted in use to operate at a vapour temperature between 110 and 400°C.

**23.** Wood particles drying means (1) according to any one of the claims 14 - 22, wherein said drying means (1) are a rotary dryer, pneumatic dryer or a fluid bed dryer.

**24.** Wood particles drying means (1) according to any one of the claims 14 - 23, wherein said heating means (3) are adapted in use to operate using condensing steam at 8 - 25 bar, cooling of flue gases or using thermal oil.
